# EUROPÄISCHE PATENTANMELDUNG

(11) **EP 2 957 849 A1**
(43) Veröffentlichungstag der Anmeldung: **23.12.2015**
(21) Anmeldenummer: 15164392.1
(22) Anmeldetag: 21.04.2015
(51) Int. Cl.: F28D 20/02

(54) **VORRICHTUNG ZUM STARTEN EINES PHASENÜBERGANGS**

(30) Priorität: 16.06.2014 DE 102014211453
(71) Anmelder: ROBERT BOSCH GMBH, 70442 Stuttgart (DE)
(72) Erfinder: Schmidt, Matthias, 70376 Stuttgart (DE); Kurras, Mathias, 70839 Gerlingen (DE)

(57) **Zusammenfassung**

Die Vorrichtung (10) dient zum Starten eines Phasenübergangs in einem Phasenwechselmaterial, insbesondere Natriumacetat-Trihydrat, und umfasst einen das Phasenwechselmaterial enthaltenden Speicher. Erfindungsgemäß ist vorgesehen, dass ein Aktuator (15, 25) zum Erzeugen eines sich zeitlich ändernden Felds vorgesehen ist, das in den Speicher eindringt, in welchem wenigstens ein Reaktionselement (14, 24) beweglich aufgenommen ist, wobei das vom Aktuator erzeugte Feld auf das wenigstens eine Reaktionselement (14, 24) so einwirkt, dass sich das Reaktionselement (14, 24) in Kontakt mit einer Wandung (11) des Speichers bewegt und dadurch an seinen Kontaktzonen eine Nukleation des Phasenwechselmaterials (12) auslöst. Vorzugsweise sind zwei Reaktionselemente (14, 24) in einer als Teil des Speichers ausgebildeten Startkammer (30) beweglich aufgenommen, die vom Magnetfeld des Aktuators (25) durchsetzt ist, wobei sich die magnetisch ausgebildeten Reaktionselemente (14, 24) unter dem Einfluss des einwirkenden Magnetfelds in Kontakt mit einer Innenwand der Startkammer (30) bewegen.

## Beschreibung

Die Erfindung betrifft eine Vorrichtung zum Starten eines Phasenübergangs eines Phasenwechselmaterials und ein Verfahren zum Starten eines derartigen Phasenübergangs.

### Stand der Technik

Phasenwechselmaterialien sind üblicherweise Speichermedien, die zur Speicherung von großen Wärmemengen eingesetzt werden, indem beim Phasenübergang zwischen zwei Aggregatzuständen große Wärmemengen freigesetzt oder zugeführt werden. Typische Phasenwechselmaterialien sind Salzhydrate wie beispielsweise Natriumacetat-Trihydrat. Dieses Salzhydrat geht bei einem Schmelzpunkt von etwa 58°C von dem festen bzw. kristallinen in den flüssigen Aggregatzustand über.

Vorrichtungen, die zum Einleiten eines derartigen Phasenübergangs dienen, beruhen auf z.T. unterschiedlichen Prinzipien. Bei einer nach dem Peltier-Effekt arbeitenden Vorrichtung wird eine Nukleation bzw. Keimbildung zum Starten eines Phasenübergangs durch lokales Abkühlen mittels eines Peltier-Elements eingeleitet und dadurch die im Salzhydrat latent gespeicherte Energie in Wärmeenergie umgewandelt. Die dazu erforderliche Kühlleistung wird als elektrische Leistung bereitgestellt. Da derartige Vorrichtungen relativ kompliziert aufgebaut sind und die dazu eingesetzten Peltier-Elemente aufgrund der häufigen Temperaturwechsel verschleißanfällig sind, sind diese Vorrichtungen für eine breite Anwendung wegen der relativ hohen Kosten eher weniger geeignet.

Aus der DE 10 2008 040 281 A1 ist eine Vorrichtung zur Kühlung von Bauteilen bekannt, umfassend ein Gehäuse mit einem darin ausgebildeten Hohlraum, in dem ein Phasenwechselmaterial aufgenommen ist, wobei das Gehäuse mindestens eine Fläche, die mit dem zu kühlenden Bauteil kontaktierbar ist, und mindestens eine wärmeabgebende Fläche aufweist. Der das Phasenwechselmaterial enthaltende Hohlraum ist von mindestens einer Spule umschlossen und das Phasenwechselmaterial enthält ferromagnetische oder magnetisierbare Partikel. Weiterhin offenbart diese Druckschrift ein Verfahren zur Kühlung eines Bauteils unter Verwendung der Vorrichtung. Für den Betrieb einer derartigen Vorrichtung ist es jedoch erforderlich, dass in dem Phasenwechselmaterial ferromagnetische oder magnetisierbare Partikel bzw. Mikropartikel enthalten sind oder zugesetzt werden.

### Offenbarung der Erfindung

Die Vorrichtung mit den Merkmalen des Patentanspruchs 1 hat den Vorteil, dass sich eine relativ einfach aufgebaute Konstruktion ergibt, mit welcher ein Phasenübergang des Phasenwechselmaterials aus dessen unterkühlter, metastabiler Flüssigphase heraus initialisierbar ist, wobei der Auslösezeitpunkt des Phasenübergangs kontrollierbar ist, indem ein außerhalb eines mit Phasenwechselmaterials gefüllten Speichers positionierter Aktuator über ein von ihm erzeugtes Feld ein in einem Hohlraum des Speichers aufgenommenes Reaktionselement in eine vom Aktuator kontrollierte Bewegung versetzt, welche in Kontakt mit einer Wandung bzw. Grenzfläche des Speichers erfolgt, wobei das Reaktionselement mit seiner/seinen Kontaktzone(n) eine lokale Störung in der metastabil vorliegenden Flüssigphase des Phasenwechselmaterials bewirkt, die ausreicht, in der Flüssigphase eine Nukleation auszulösen, die mithin einen Phasenübergang zum stabilen, festen Aggregatzustand einleitet. Im Unterschied zur Vorrichtung gemäß dem Stand der Technik, welche von einer Festphase des Phasenwechselmaterials ausgeht und ein anderes Funktions- und Wirkprinzip nutzt, geht die erfindungsgemäße Vorrichtung gemäß Anspruch 1 von einer unterkühlten, metastabilen Flüssigphase des Phasenwechselmaterials aus.

Weitere vorteilhafte Weiterbildungen und Ausgestaltungen der Erfindung ergeben sich durch die in den Unteransprüchen aufgeführten Maßnahmen.

Eine bevorzugte Ausführungsform der Erfindung, die einfach realisierbar ist und effizient arbeitet, besteht darin, dass das von dem Aktuator erzeugte Feld ein Magnetfeld und das wenigstens eine Reaktionselement aus einem magnetisch beeinflussbaren Material gebildet ist. Zweckmäßigerweise kann dazu der Aktuator als Elektromagnet mit wenigstens einem Kern und wenigstens einer Spule ausgebildet sein.

Gemäß einer vorteilhaften und bevorzugten Ausgestaltung der Erfindung weist der Speicher eine Hauptkammer und eine mit der Hauptkammer verbundene Startkammer auf, wobei das wenigstens eine Reaktionselement in der Startkammer beweglich aufgenommen ist, die vom Feld des Aktuators durchsetzt ist, wobei sich das wenigstens eine Reaktionselement unter dem Einfluss des einwirkenden Felds in Kontakt mit einer Innenwand der Startkammer bewegt. Die Startkammer bildet als Teil des Speichers einen zum Starten bzw. Einleiten einer Nukleation vorgesehen Reaktionsraum, so dass die Nukleation in der Startkammer einsetzt und sich von dort aus zur Hauptkammer, in welcher die Hauptmasse des Phasenwechselmaterials enthalten ist, fortpflanzt. Da zur Nukleation in der Startkammer nur ein relativ kleines Volumen des Phasenwechselmaterials erforderlich ist, ist die Startkammer mit ihren baulichen Abmessungen an die Dimensionen des Reaktionselements bzw. der Reaktionselemente anpassbar. Außerdem eröffnet sich dadurch die Möglichkeit, die Startkammer und den Aktuator so anzuordnen, dass das vom Aktuator erzeugte Feld die Startkammer zumindest in einem Teilabschnitt durchdringen kann.

Indem die Startkammer in einem Luftspalt des als Elektromagnet ausgebildeten Aktuators angeordnet ist und die Startkammer aus einem magnetisch durchlässigen Material wie Edelstahl, Glas oder Kunststoff gebildet ist, können vorteilhaft die von der/den Spule(n) des Aktuators erzeugten Magnetfeldlinien gebündelt die Startkammer zumindest in einem Kammerbereich durchsetzen, der von dem Luftspalt umfasst ist. Wenn dabei die Startkammer mit ihrem Außenquerschnitt an die Breite des Luftspalts angepasst ist, ist eine Magnetfelddurchdringung ohne nennenswerte Streuverluste möglich. Außerdem können dadurch der Aktuator und die Startkammer eine Unterbaugruppe der Vorrichtung bilden, wodurch ein modularer Aufbau der Vorrichtung möglich ist.

Gemäß einer zweckmäßigen Ausgestaltung der Erfindung ist das vom Aktuator erzeugte Magnetfeld bezüglich Größe und Richtung veränderlich ausgebildet, um das wenigstens eine Reaktionselement in eine kontrollierte Bewegung zu versetzen. Um ein derartiges magnetisches Wechselfeld zu erzeugen, ist zur Ansteuerung des Aktuators eine Wechselspannung vorgesehen, die an der/den Spule(n) des als Elektromagnet ausgebildeten Aktuators anliegt. Dabei kann die Wechselspannung als eine rechteckförmige Spannung, eine sinusförmige Spannung oder eine andere sich zumindest näherungsweise periodisch ändernde Spannung ausgebildet sein. Um insbesondere in unterkühltem, flüssigem Natriumacetat-Trihydrat eine Nukleation unter bestimmten Randbedingungen reproduzierbar auszulösen, hat es sich als zweckmäßig erwiesen, wenn die Wechselspannung, insbesondere die Rechteckspannung, auf eine Arbeitsfrequenz eingestellt ist, die im Frequenzbereich von etwa 1 bis 100 Hertz liegt.

Eine besonders zweckmäßige Ausgestaltung der Erfindung besteht darin, dass die Startkammer im Wesentlichen hohlzylindrisch ausgebildet ist, wobei das wenigstens eine Reaktionselement zylinderförmig ausgebildet ist. Dadurch wird auch eine Abrollbewegung des/der Reaktionselement(e) an der Mantelinnenfläche der Startkammer möglich.

Eine vorteilhafte Weiterbildung der Erfindung besteht darin, dass zwei magnetisch ausgebildete Reaktionselemente vorgesehen sind, welche in der Startkammer so hintereinander aufgenommen sind, dass sie sich in ihrer unbetätigten Ruhestellung voneinander abstoßen. Die magnetische Abstoßung kann dadurch erzielt werden, dass gleichartige Pole der beiden Reaktionselemente einander zugewandt sind. Dadurch kann im aktivierten Zustand des Aktuators das von diesem erzeugte magnetische Wechselfeld die Reaktionselemente aus ihrer Ruhestellung so auslenken, dass letztere eine kombinierte Dreh- und Taumelbewegung in Kontakt mit der Innenwand der Startkammer ausführen, wodurch eine Störung im metastabil vorliegenden Phasenwechselmaterial erfolgt und eine Nukleation angeregt und ausgelöst wird.

Bei dem erfindungsgemäßen Verfahren, das zum Starten eines derartigen Phasenübergangs in einem Phasenwechselmaterial, insbesondere in Natrionacetat-Trihydrat, dient, ist vorgesehen, dass ein zeitlich sich änderndes Feld erzeugt wird, welches in einen das Phasenwechselmaterial enthaltenden Speicher eindringt und auf wenigstens ein im Speicher aufgenommenes Reaktionselement einwirkt, wobei das wenigstens eine Reaktionselement in Bewegung und Kontaktierung zu einer Wandung des Speichers gebracht wird, wodurch eine Nukleation des Phasenwechselmaterials angeregt und ausgelöst wird. Dabei erfolgt das Erzeugen des sich zeitlich ändernden Felds in Reaktion auf ein Auslösesignal beispielsweise einer Steuerungseinheit. Das dann erzeugte Feld wird deaktiviert, wenn eine Zustandsänderung des Phasenwechselmaterials detektiert wird und in Reaktion darauf ein Stoppsignal generiert wird, um die Deaktivierung bzw. das Zusammenbrechen des sich zeitlich ändernden Felds zu initiieren. Die Detektion der Zustandsänderung kann beispielsweise mittels eines Temperatursensors erfolgen, welcher die Temperatur des Phasenwechselmaterials laufend erfasst bzw. überwacht und dessen Messwerte von der Steuerungseinheit verarbeitet bzw. ausgewertet werden. Ein von dem Temperatursensor gemessener Anstieg der Temperatur ist charakteristisch für eine Nukleation bzw. Zustandsänderung. Die den Temperaturverlauf auswertende Steuerungseinheit generiert daraufhin das Stoppsignal, das analog oder digital ausgebildet sein kann, um einen zur Felderzeugung erforderlichen Steuerstrom abzuschalten. Indem die Steuerungseinheit sowohl das Auslösesignal als auch das Stoppsignal generiert, ist dadurch ein weitgehend automatisch ablaufender Prozess möglich.

### Zeichnungen

Ausführungsformen der Erfindung sind in der nachfolgenden Beschreibung und in den beigefügten Zeichnungen näher erläutert. Letztere zeigen in rein schematisch gehaltenen Ansichten:
Fig. 1 eine Vorrichtung gemäß einer ersten Ausführungsform in einem Ausschnitt, wobei die Vorrichtung einen Speicher mit einem darin aufgenommenen Phasenwechselmaterial und einem an einer Innenseite einer Wandung des Speichers beweglich angeordneten Reaktionselement sowie einen außerhalb des Speichers angeordneten Aktuator aufweist, welcher ein Magnetfeld zum Betätigen des Reaktionselements erzeugt,
Fig. 2 die Vorrichtung gemäß einer zweiten Ausführungsform in einer Ansicht analog Fig. 1, wobei der Aktuator als Spule ausgebildet und über eine daran angelegte Wechselspannung eine veränderliches Magnetfeld erzeugt, welches auf das im Phasenwechselmaterial befindliche Reaktionselement einwirkt,
Fig. 3 das Reaktionselement der Vorrichtung in zwei unterschiedlichen Stellungen in Kontakt mit einer Grenzfläche des Speichers mit dem darin aufgenommenen Phasenwechselmaterial,
Fig. 4 die Vorrichtung gemäß einer dritten Ausführungsform, wobei der Aktuator als Elektromagnet ausgebildet ist, dessen Magnetfeld auf zwei Reaktionselemente einwirkt, welche in einer als Teil des Speichers ausgebildeten Startkammer aufgenommen sind, die in einem Luftspalt des Elektromagneten angeordnet ist,
Fig. 5 eine im Schnitt gehaltene Detailansicht der zylinderförmig ausgebildeten Startkammer von Fig. 4 mit darin beweglich aufgenommenen Reaktionselementen, welche magnetisch ausgebildet und hintereinander angeordnet sind, und
Fig. 6 ein Ablaufdiagramm mit den wesentlichen Verfahrensschritten zum Starten eines Phasenübergangs.

### Beschreibung der Ausführungsformen

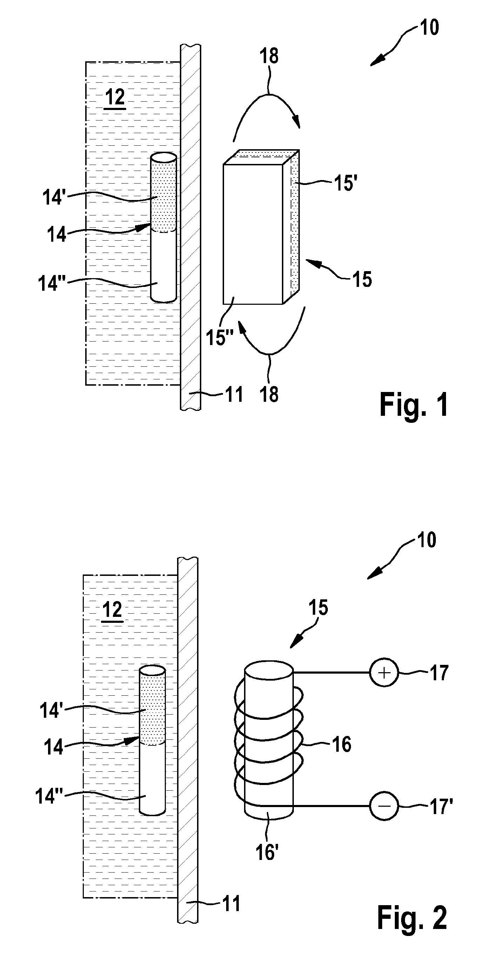

Fig. 1 zeigt eine im Ganzen mit 10 bezeichnete erfindungsgemäße Vorrichtung gemäß einer ersten Ausführungsform in einer stark schematisch gehaltenen Ansicht. Dabei weist die Vorrichtung 10 einen Speicher auf, von dem in Fig. 1 zur Vereinfachung der Darstellung lediglich ein Ausschnitt einer im Schnitt gehaltenen Wandung 11 dargestellt ist, die einen im Innern des Speichers ausgebildeten Hohlraum begrenzt, in dem ein Phasenwechselmaterial 12 enthalten ist, das ein Salzhydrat wie beispielsweise Natriumacetat-Trihydrat sein kann und in seinem Ausgangszustand im unterkühlten flüssigen Aggregatzustand vorliegt. Ferner weist die Vorrichtung 10 ein Reaktionselement 14 und einen Aktuator 15 auf, wobei das Reaktionselement 14 zusammen mit dem Phasenwechselmaterial 12 im Innern des Speichers, d.h. im Hohlraum aufgenommen ist, während der Aktuator 15 außerhalb des Speichers angeordnet ist. Im Ausführungsbeispiel ist das beweglich in dem Speicher aufgenommene Reaktionselement 14 vorzugsweise als stabförmiger Permanentmagnet ausgebildet. Alternativ ist es jedoch auch möglich, das Reaktionselement aus einem metallischen Material oder einem Legierungsmaterial zu bilden, welches eine positive Suszeptibilität aufweist. Der außerhalb des Speichers angeordnete Aktuator 15 ist im Ausführungsbeispiel ebenfalls als Permanentmagnet ausgebildet, dessen Magnetfeld die Wandung 11 des Speichers durchgreift und in dessen Innern, d.h. im Hohlraum eine Kraft auf das Reaktionselement 14 ausübt. Um einen Durchgriff der magnetischen Feldlinien in den von der Wandung 11 begrenzten Hohlraum zu erlauben, ist die Wandung 11 aus einem unmagnetischen bzw. magnetisch durchlässigen Material gebildet wie z.B. aus Kunststoff.

Durch eine Betätigung des Aktuators 15, die im Ausführungsbeispiel durch eine - beispielsweise manuell in Gang gesetzte - Rotationsbewegung des Aktuators 15 erfolgt, die in Fig. 1 durch Pfeile 18 dargestellt ist, erzeugt der rotierende Aktuator 15 ein in Größe und Richtung veränderliches Magnetfeld, unter dessen Einwirkung das innerhalb des Speichers befindliche Reaktionselement 14 einerseits in Richtung des Aktuators 15 driftet und dadurch zur Anlage an die Innenseite der Wandung 11 kommt, während es andererseits in Rotation versetzt wird. Das veränderliche Magnetfeld wird derart gewählt bzw. eingestellt, dass während dieser Rotation das Reaktionselement 14 in Kontakt mit der Wandung 11 bleibt, wodurch eine Nukleation des Phasenwechselmaterials und mithin ein Phasenübergang von der metastabilen Flüssigphase zur Festphase ausgelöst wird.

Fig. 2 zeigt eine Seitenansicht einer erfindungsgemäßen Vorrichtung gemäß einer zweiten Ausführungsform, die sich von der ersten Ausführungsform von Fig. 1 darin unterscheidet, dass der außerhalb des Speichers positionierte Aktuator 15 als Elektromagnet mit einer um einen Eisenkern 16' gewickelten Spule 16 ausgebildet ist und im Takt einer an den Anschlüssen 17, 17' der Spule 16 angelegten Wechselspannung ein veränderliches Magnetfeld erzeugt, dessen Feldlinien durch die Wandung 11 des Speichers durchgreifen und auf das Reaktionselement 14 einwirken. Das Magnetfeld übt auf das Reaktionselement 14 einerseits eine Zugkraft aus, die das Reaktionselement 14 in Kontakt zur Wandung 11 bringt und andererseits bewirkt es aufgrund seiner Zeitabhängigkeit eine rotierende oder oszillierende Bewegung des Reaktionselements 14, die in Kontakt mit der Innenseite der Wandung 11 erfolgt, worauf eine Nukleation des Phasenwechselmaterials und mithin ein Phasenübergang von der metastabilen Flüssigphase zur Festphase ausgelöst wird.

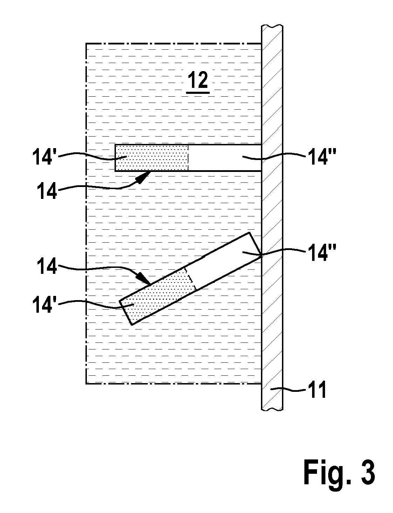

Fig. 3 zeigt in einer Seitenansicht das Reaktionselement 14 der erfindungsgemäßen Vorrichtung in zwei unterschiedlichen Bewegungsphasen an der Innenseite der Wandung 11 des Speichers. In einer im oberen Bereich von Fig. 3 dargestellten Stellung befindet sich das Reaktionselement 14 mit seiner planen Endfläche, welche zugleich den Südpol 14" darstellt, während der Bewegung in direktem Kontakt mit der Innenseite der Wandung 11. Demgegenüber befindet sich das Reaktionselement 14 in einer im unteren Bereich von Fig. 3 dargestellten Stellung mit einer Kante in direktem Kontakt mit der Innenseite der Wandung 11. In beiden Fällen startet die Nukleation des Phasenwechselmaterials an der jeweiligen Kontaktzone des Reaktionselements 14 mit der Wandung 11, d.h. im ersten Fall an der planen Endfläche und im zweiten Fall an der linienförmig verlaufenden Kante des Reaktionselements. Gemäß experimentellen Beobachtungen löst auch eine punktförmige Kontaktzone eine Nukleation aus.

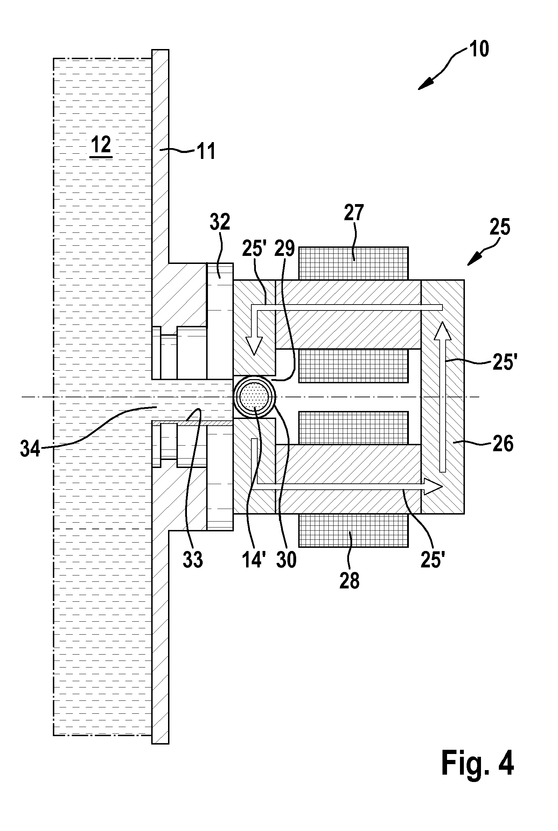

Fig. 4 zeigt eine Schnittansicht einer erfindungsgemäßen Vorrichtung 10 gemäß einer dritten Ausführungsform. Eine lediglich ausschnittsweise anhand eines Wandungsabschnitts 11 dargestellte Hauptkammer als Teil des Speichers ist strömungstechnisch über einen Verbindungsflansch 32 mit einer Startkammer 30 verbunden, welche der Hauptkammer mithin exponiert vorgeordnet ist. Dadurch ist das Phasenwechselmaterial 12, das im bevorzugten Ausführungsbeispiel als Natriumacetat-Trihydrat im unterkühlten flüssigen Aggregatzustand bei einer Temperatur von beispielsweise 20 °C vorliegt, nicht nur im Innern der Hauptkammer des Speichers, sondern auch im Innern des Verbindungsflanschs 32 und der Startkammer 30 enthalten bzw. verteilt. Im Innern der Startkammer 30 sind die zwei Reaktionselemente 14, 24, die als Stabmagnete ausgebildet sind, beweglich aufgenommen und befinden sich zusammen mit dem Phasenwechselmaterial 12 innerhalb der im Wesentlichen rohrförmig ausgebildeten Startkammer 30.

Zur Betätigung der Reaktionselemente 14, 24 ist der Aktuator 25 als Elektromagnet ausgebildet, welcher einen Kern 26 mit zwei diesen umschließenden Spulen 27, 28 aufweist. Die Startkammer 30 ist in einem zwischen zwei gegenüberliegenden Polflächen des Kerns 26 verlaufenden Luftspalt 29 des Elektromagneten 25 aufgenommen, so dass ein vom Elektromagneten 25 erzeugtes Magnetfeld 25' über den Luftspalt 29 in die Startkammer 30 eindringen und auf die Reaktionselemente 14, 24 einwirken kann. Damit die magnetischen Feldlinien die Startkammer 30 durchsetzen können, ist diese unmagnetisch ausgebildet und kann dazu aus Edelstahl, Glas oder einem Kunststoff gebildet sein. Um die Reaktionselemente 14, 24 kontrolliert bewegen zu können, ist zur elektrischen Ansteuerung der Spulen 27, 28 ein Wechselstrom vorgesehen. Das von den derart bestromten Spulen 27, 28 erzeugte Magnetfeld 25' ändert seine Richtung und Größe in Abhängigkeit von dem Wechselstrom. Da dieses Magnetfeld 25' nicht nur im Kern 26, sondern auch im Luftspalt 29 existent ist, wird dadurch eine Kraft auf die innerhalb der Startkammer 30 aufgenommenen und somit innerhalb des Luftspalts 29 befindlichen Reaktionselemente 14, 24 ausgeübt, die aufgrund einer periodischen Umpolung an den den Luftspalt 29 begrenzenden Polflächen des Kerns 26 eine abwechselnde Abstoßung und Anziehung der Reaktionselemente 14, 24 zur Folge hat. Daraus resultiert eine Bewegung der Reaktionselemente, welche sich typischerweise aus einer Dreh- und Taumelbewegung zusammensetzt.

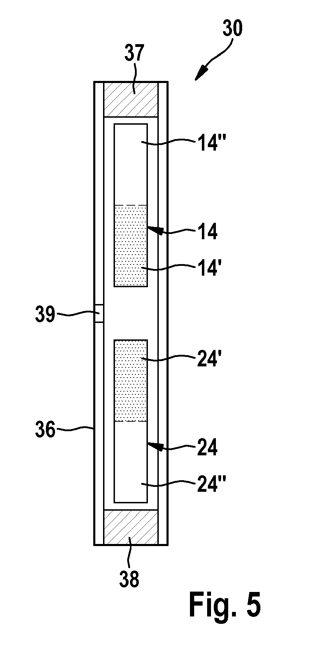

Während dieser Bewegung kommen die Reaktionselemente 14, 24 in Kontakt mit der Innenwand der Startkammer 30, wobei die entsprechenden Kontaktzonen der Reaktionselemente in dem Phasenwechselmaterial eine Nukleation auslösen, welche den Phasenübergang vom unterkühlten, flüssigen und mithin metastabilen Aggregatzustand in den stabilen, kristallinen Festzustand einleitet. Die in der Startkammer 30 eingeleitete Nukleation breitet sich dann als Nukleationsfront über eine - in Fig. 5 dargestellte - Öffnung 39 in der Startkammer 30 in einen Durchgangskanal 33 aus, der sich zentral durch einen an der Außenwandung 11 der Hauptkammer angebrachten Verbindungsflansch 32 erstreckt und ebenfalls mit Phasenwechselmaterial gefüllt ist. Da der Verbindungsflansch 32 eine Öffnung 34 in der Außenwand 11 der Hauptkammer mit der Öffnung 39 im Mantelbereich der Startkammer 30 koppelt, gelangt die Nukleationsfront schließlich in die Hauptkammer. Um diese Kopplung präzise sicherzustellen, ist der Kern 26 des Aktuators 25 an seiner den Luftspalt 29 aufweisenden Seite bündig an der Vorderseite des Verbindungsflanschs 32 angebracht und befestigt, wobei der Verbindungsflansch 32 stirnseitig Befestigungsmittel (nicht dargestellt) aufweist, welche dazu dienen, den Aktuator 25 positionsgenau an dem Verbindungsflansch 32 zu halten, so dass einerseits der Luftspalt 29 des Aktuators 25 und andererseits die im Mantelbereich der Startkammer 30 angeordnete Öffnung 39 mit dem Durchgangskanal 33 fluchtet. Der im Querschnitt kreisförmige Außendurchmesser der Startkammer 30 und die Breite des Luftspalts 29 im Kern 26 sind aufeinander abgestimmt, so dass der zylindrische Mantelbereich der Startkammer 30 in den Luftspalt 29 passt und das Magnetfeld des Aktuators 25 gebündelt in die Startkammer 30 eindringen kann. Aufgrund der gebündelt die Startkammer 30 durchsetzenden Magnetfeldlinien kann der Aktuator 25 auf die in dem Hohlraum der Startkammer 30 "gefangenen" Reaktionselemente 14, 24 definierter einwirken, als dies bei den anderen Ausführungsformen gemäß Fig. 1 bis 3 möglich ist.

Fig. 5 zeigt in einem Längsschnitt eine Detailansicht der Startkammer 30 mit den beiden darin aufgenommenen Reaktionselementen 14, 24. Die Startkammer 30 ist hohlzylindrisch ausgebildet und weist einen Zylindermantelbereich 36 auf, dessen entgegengesetzte Enden jeweils mittels eines Endstücks 37, 38 abgeschlossen sind. Die Reaktionselemente 14, 24 sind als zylinderförmige Stabmagnete mit gleichen Abmessungen ausgebildet und sind so im Innern der Startkammer 30 hintereinander aufgenommen bzw. angeordnet, dass ihre jeweiligen Nordpole 14', 24' einander zugewandt sind; aufgrund der dadurch wirkenden statischen magnetischen Abstoßungskräfte befinden sich in Ruhestellung, d.h. ohne Einwirkung einer äußeren Kraft, der Reaktionselemente 14, 24 die jeweiligen Südpole 14", 24" entweder im Anschlag an den Endstücken 37, 38 der Startkammer 30 oder in deren Nähe. Damit das Magnetfeld symmetrisch auf die Reaktionselemente einwirken kann, ist ein mittlerer Abschnitt der Startkammer 30 in dem Luftspalt 29 angeordnet, so dass die entgegengesetzten Enden der Startkammer 30 aus dem Luftspalt 29 zu beiden Seiten des Aktuators symmetrisch herausragen. Dadurch ist der mittlere Abschnitt der Startkammer im Wesentlichen von dem Magnetfeld durchsetzt. Im aktivierten Zustand des Aktuators wirkt das dann von diesem erzeugte magnetische Wechselfeld auf die Reaktionselemente 14, 24 ein. Aufgrund des sich ständig zyklisch ändernden Magnetfelds werden die Reaktionselemente 14, 24 aus ihrer Ruhestellung zu einer kombinierten Dreh- und Taumelbewegung ausgelenkt, wobei die Reaktionselemente an der Innenwand der Startkammer 30 abrollen können, bis ein Ausbleiben des sich während der kombinierten Dreh- und Taumelbewegung periodisch wiederholenden "Klopfens" der Reaktionselemente an der Innenwand die Einsatzschwelle der Nukleation des in der Startkammer 30 enthaltenen Phasenwechselmaterials anzeigt. Gemäß einem alternativen Ausführungsbeispiel können die Reaktionselemente 14, 24 im Innern der Startkammer 30 so hintereinander angeordnet sein, dass ihre jeweiligen Südpole 14", 24" einander zugewandt sind.

Um die Beweglichkeit der Reaktionselemente 14, 24 innerhalb der Startkammer 30 zu ermöglichen, ist der kreisförmige Innendurchmesser der Startkammer 30 um ein bestimmtes Spiel größer bemessen als der kreisförmige Außendurchmesser der beiden Reaktionselemente 14, 24, so dass sich in radialer Richtung ein Spiel zwischen der Innenwand des Zylindermantelbereichs 36 der Startkammer 30 und dem Außenumfang der beiden Reaktionselemente 14, 24 ergibt. In Längserstreckung der Startkammer 30 ist diese länger dimensioniert als die Summe der Längen beider Reaktionselemente 14, 24, um auch eine translatorische Bewegung der beiden Reaktionselemente 14, 24 in dieser Richtung zuzulassen.

Indem zwei Reaktionselemente 14, 24 in der Startkammer 30 vorgesehen sind, ist es theoretisch auch möglich, in der Startkammer 30 auch eine Doppelnukleation bzw. "Doppelzündung" auszulösen. In der Praxis wird jedoch eher eine "Einfachzündung" erfolgen, da die Wahrscheinlichkeit, dass eines der Reaktionselemente zuerst die Nukleation auslöst, größer ist als bei einer gleichzeitig durch beide Reaktionselemente erfolgenden "Doppelzündung". Aus Symmetriegründen ist die zur Ankopplung des Verbindungsflanschs 32 dienende Öffnung 39 etwa mittig im Umfangsmantel 36 der Startkammer 30 eingelassen.

Zur Ansteuerung des Aktuators 25 ist eine Wechselspannung vorgesehen, die an die Spulen 27, 28 angelegt wird. Als vorteilhaft hat sich dabei erwiesen, wenn die Wechselspannung eine Rechteckspannung ist, die aufgrund ihrer Flankensteilheit ein schnelles Antwortverhalten der Spulen 27, 28 bewirkt, wodurch ein sich in Größe und Richtung änderndes Magnetfeld 25' von den Spulen 27, 28 erzeugt wird. Die Arbeitsfrequenz der Rechteckspannung liegt in einem Bereich zwischen etwa 1 bis etwa 100 Hertz, vorzugsweise bei etwa 20 Hertz. Im unterkühlten flüssigen Zustand von Natriumacetat-Trihydrat, d.h. bei einer Ausgangstemperatur von etwa 20 °C, wird dadurch reproduzierbar eine Nukleation ausgelöst.

Experimentelle Untersuchungen haben gezeigt, dass eine Nukleation und mithin ein Phasenübergang des Phasenwechselmaterials vom unterkühlten flüssigen Aggregatzustand zum festen Aggregatzustand bei folgenden Randbedingungen einleitbar ist: (i) Das Phasenwechselmaterial ist Natriumacetat-Trihydrat in seiner stöchiometrischen Zusammensetzung mit einer Dichte von etwa 1280 kg/m³ in unterkühltem, flüssigem Aggregatzustand bei einer Temperatur von etwa 20 °C; (ii) der als Aktuator 25 dienende Elektromagnet gemäß der dritten Ausführungsform wird mit einer Rechteckspannung, deren Frequenz im Bereich von etwa 1 bis 100 Hz, vorzugsweise bei 20 Hz, liegt, angesteuert, wobei die Rechteckspannung an den Spulen 27, 28 anliegt. Die Relaxationszeit bzw. Verzögerungszeit, mit der die Nukleation einsetzt, liegt in der Größenordnung von wenigen Sekunden, typischerweise bei ≤ 1 sec. Das Phasenwechselmaterial wird durch Temperaturmessung überwacht. Dabei zeigt eine sprunghaft erfolgende Temperaturänderung ΔT im zeitlichen Temperaturverlauf die Einsatzschwelle des Phasenübergangs an. Die Nukleationsfront breitet sich dann mit einer Geschwindigkeit von 6 - 7 mm/sec im Phasenwechselmaterial aus.

Um das nach einer durchgeführten Nukleation erstarrte Phasenwechselmaterial, insbesondere Natrimacetat-Trihydrat, wieder in den unterkühlten flüssigen Aggregatzustand zu überführen, so dass die in dem erstarrten Phasenwechselmaterial ebenfalls "festgesetzten" Reaktionselemente wieder ihre Beweglichkeit zurück erlangen können, ist gemäß einer - nicht dargestellten - Abwandlung der dritten Ausführungsform der erfindungsgemäßen Vorrichtung vorgesehen, die von den Spulen 27, 28 erzeugbare Abwärme zu nutzen, um das erstarrte Phasenwechselmaterial zu erwärmen. Dazu wird der Betriebsmodus des Aktuators 25 geändert und an die Spulen 27, 28 vorzugsweise ein Gleichstrom angelegt. Die dadurch von den Spulen 27, 28 produzierte Abwärme wird dann durch Wärmeleitung insbesondere der Startkammer 30 zugeführt. Dadurch kann die Rückkehr des erstarrten Phasenwechselmaterials in den flüssigen Aggregatzustand deutlich beschleunigt werden, so dass schnellere Zykluswechsel möglich sind.

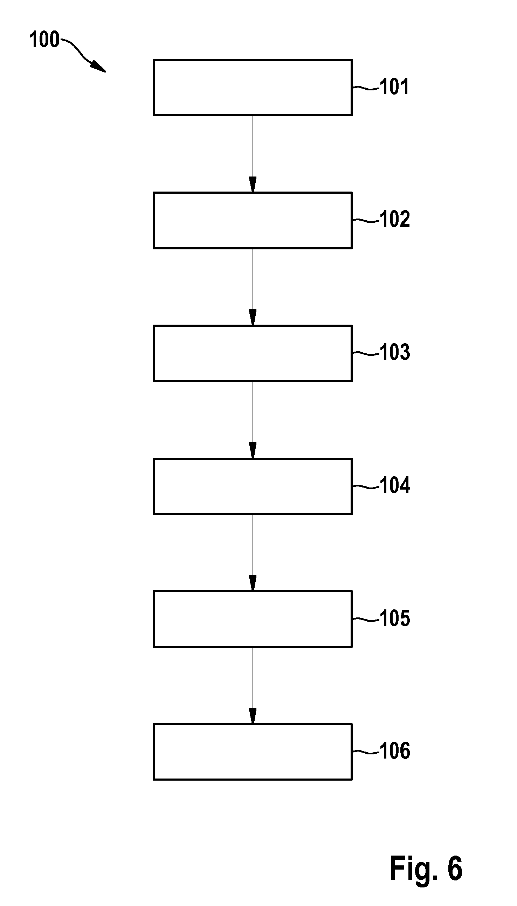

Fig. 6 zeigt ein Ablaufdiagramm 100 mit den wesentlichen Verfahrensschritten zum Starten eines Phasenübergangs. Mittels einer nicht dargestellten Steuerungseinheit wird zunächst gemäß einem Schritt 101 ein Auslösesignal generiert, das gemäß einem Schritt 102 zum Ansteuern des Aktuators bzw. zum Anlegen einer Wechselspannung an die Spulen 27, 28 und mithin zur Erzeugung des sich in Größe und Richtung ändernden Magnetfelds 25' führt. Daraus resultiert eine Bewegung des Reaktionselements bzw. der Reaktionselemente in Kontakt mit einer Wandung gemäß einem Schritt 103. Gemäß einem Ausführungsbeispiel wird mittels eines nicht dargestellten Temperatursensors laufend die Temperatur des Phasenwechselmaterials erfasst bzw. überwacht und an die Steuerungseinheit übermittelt, welche die vom Temperatursensor gelieferten Messwerte verarbeitet bzw. auswertet. Wird gemäß einem Schritt 104 ein plötzlicher Anstieg der Temperatur detektiert, der charakteristisch für eine ausgelöste Nukleation ist, so wird von der Steuerungseinheit als Reaktion auf diese Detektion ein Stoppsignal generiert, welches ein Abschalten der an den Spulen 27, 28 anliegenden Wechselspannung bewirkt, worauf gemäß Schritt 106 das Magnetfeld 25' zusammenbricht. Die Detektion der Zustandsänderung bzw. Nukleation ist auch mittels eines Drucksensors möglich, da eine Druckänderung im Phasenwechselmaterial, d.h. ein Absinken des Drucks, charakteristisch für eine Dichteänderung aufgrund eines Phasenübergangs ist. Ferner ist es möglich, die Zustandsänderung des Phasenwechselmaterials anhand der dabei erfolgenden charakteristischen Absorptionsänderung des elektromagnetischen Felds zu detektieren, die an der Änderung der Flankensteilheit der zur Ansteuerung der Spulen des Aktuators dienenden Rechteckspannung nachweisbar ist.

Zusammenfassend ist bei der erfindungsgemäßen Vorrichtung 10 vorgesehen, dass wenigstens ein außerhalb des Speichers angeordneter Aktuator 15, 25 zum Erzeugen eines sich zeitlich ändernden magnetischen Felds vorgesehen ist, dass wenigstens ein Reaktionselement 14, 24 im Speicher beweglich aufgenommen ist, wobei das Reaktionselement 14, 24 bei vom Aktuator erzeugtem Feld in Kontakt mit einer Wandung bzw. Grenzfläche 11 des Speichers gelangt und dadurch eine Nukleation des Phasenwechselmaterials 12 anregt und auslöst. Vorzugsweise sind zwei Reaktionselemente 14, 24 in einer Startkammer 30 beweglich aufgenommen, die mit der Hauptkammer in Verbindung steht und vom Magnetfeld des Aktuators 25 durchsetzt ist, wobei sich die magnetisch ausgebildeten Reaktionselemente 14, 24 unter dem Einfluss des einwirkenden Magnetfelds in Kontakt mit einer Innenwand der Startkammer 30 bewegen. Gemäß dem in Fig. 4 dargestellten Ausführungsbeispiel ist die Hauptkammer durch die Außenwandung 11, welche das Phasenwechselmaterial 12 umfasst, und den in der Außenwandung angeordneten Verbindungsflansch 32 mit dem den Verbindungsflansch zentral durchsetzenden Durchgangskanal 33 gebildet.

Die erfindungsgemäße Vorrichtung eignet sich zur Verwendung bei Latentwärmespeichern, die beispielsweise zur Erwärmung von Flüssigkeiten wie Motorenöl oder Kühlwasser in Kraft- oder Nutzfahrzeugen eingesetzt werden.

## Patentansprüche

1. Vorrichtung zum Starten eines Phasenübergangs in einem Phasenwechselmaterial, insbesondere Natriumacetat-Trihydrat, mit einem das Phasenwechselmaterial enthaltenden Speicher, **dadurch gekennzeichnet, dass** ein Aktuator (15, 25) zum Erzeugen eines sich zeitlich ändernden Felds vorgesehen ist, dass wenigstens ein Reaktionselement (14, 24) im Speicher beweglich aufgenommen ist, wobei das Reaktionselement (14, 24) bei vom Aktuator erzeugtem Feld in Kontakt mit einer Wandung (11) des Speichers gelangt und dadurch eine Nukleation des Phasenwechselmaterials (12) anregt und auslöst.

2. Vorrichtung nach Anspruch 1, **dadurch gekennzeichnet, dass** das von dem Aktuator (15) erzeugte Feld ein Magnetfeld ist und das wenigstens eine Reaktionselement aus einem magnetisch beeinflussbaren Material gebildet ist.

3. Vorrichtung nach Anspruch 1, **dadurch gekennzeichnet, dass** der Speicher eine Hauptkammer und eine mit der Hauptkammer verbundene Startkammer (30) aufweist, wobei das wenigstens eine Reaktionselement (14, 24) in der Startkammer (30) beweglich aufgenommen ist, die vom Feld des Aktuators (25) durchsetzt ist und sich das wenigstens eine Reaktionselement (14, 24) unter dem Einfluss des einwirkenden Felds in Kontakt mit einer Wandung der Startkammer (30) bewegt.

4. Vorrichtung nach Anspruch 3, **dadurch gekennzeichnet, dass** die Startkammer (30) aus einem magnetisch durchlässigen Material wie Edelstahl, Glas oder Kunststoff gebildet ist.

5. Vorrichtung nach einem der Ansprüche 1 bis 3, **dadurch gekennzeichnet, dass** der Aktuator (25) als Elektromagnet mit wenigstens einem Kern (26) und wenigstens einer Spule (27, 28) ausgebildet ist.

6. Vorrichtung nach Anspruch 5, **dadurch gekennzeichnet, dass** die Startkammer (30) in einem Luftspalt (29) des Kerns (26) des Aktuators (25) angeordnet ist.

7. Vorrichtung nach einem der Ansprüche 1 bis 6, **dadurch gekennzeichnet, dass** das vom Aktuator (25) erzeugte Feld bezüglich Größe und Richtung veränderlich ausgebildet ist.

8. Vorrichtung nach einem der Ansprüche 5 bis 7, **dadurch gekennzeichnet, dass** zur Ansteuerung des Aktuators (25) eine Wechselspannung vorgesehen ist, welche an der/den Spule(n) (27, 28) anliegt.

9. Vorrichtung nach Anspruch 8, **dadurch gekennzeichnet, dass** die Wechselspannung als rechteckförmige Spannung, sinusförmige Spannung, sägezahnförmige Spannung oder eine andere sich zumindest näherungsweise periodisch ändernde Spannung ausgebildet ist.

10. Vorrichtung nach einem der Ansprüche 6 bis 9, **dadurch gekennzeichnet, dass** die Startkammer (30) mit ihrem Außenquerschnitt an die Breite des Luftspalts (29) angepasst ist.

11. Vorrichtung nach Anspruch 3 bis 10, **dadurch gekennzeichnet, dass** zumindest zwei magnetisch ausgebildete Reaktionselemente (14, 24) vorgesehen sind, welche in der Startkammer (30) so hintereinander aufgenommen sind, dass sie sich in ihrer unbetätigten Ruhestellung voneinander abstoßen.

12. Vorrichtung nach einem der Ansprüche 3 bis 11, **dadurch gekennzeichnet, dass** die Startkammer (30) im Wesentlichen hohlzylindrisch ausgebildet ist, wobei das wenigstens eine Reaktionselement (14, 24) zylinderförmig ausgebildet ist.

13. Verfahren zum Starten eines Phasenübergangs in einem Phasenwechselmaterial, insbesondere in Natriumacetat-Trihydrat, wobei ein zeitlich sich änderndes Feld erzeugt wird (102), welches in einen das Phasenwechselmaterial enthaltenden Speicher eindringt und auf wenigstens ein im Speicher aufgenommenes Reaktionselement einwirkt, wodurch das wenigstens eine Reaktionselement in Bewegung und Kontaktierung zu einer Wandung des Speichers gebracht wird (103), wodurch eine Nukleation des Phasenwechselmaterials angeregt und ausgelöst wird.

14. Verfahren nach Anspruch 13, **dadurch gekennzeichnet, dass** das Erzeugen (102) des sich zeitlich ändernden Felds in Reaktion auf ein Auslösesignal (101) hin erfolgt, dass das sich zeitlich ändernde Feld deaktiviert wird, wenn eine Zustandsänderung des Phasenwechselmaterials detektiert (104) und in Reaktion darauf ein Stoppsignal generiert (105) wird, um die Deaktivierung des sich zeitlich ändernden Felds zu initiieren.
